(19) 

Europäisches Patentamt 
European Patent Office 
Office européen des brevets

(11) **EP 4 484 372 A1**

(12) **EUROPEAN PATENT APPLICATION**

(43) Date of publication:
**01.01.2025 Bulletin 2025/01**

(21) Application number: **24185111.2**

(22) Date of filing: **27.06.2024**

(51) International Patent Classification (IPC):
*C01B 32/05* (2017.01)    *C01B 32/168* (2017.01)
*H01M 4/62* (2006.01)     *C01B 32/312* (2017.01)
*H01G 11/34* (2013.01)    *H01G 11/36* (2013.01)
*H01G 11/42* (2013.01)    *H01G 11/24* (2013.01)
*H01G 11/30* (2013.01)    *H01M 4/133* (2010.01)
*H01M 4/134* (2010.01)    *H01M 4/36* (2006.01)
*H01M 4/38* (2006.01)     *H01M 4/587* (2010.01)
*H01M 10/0525* (2010.01)   *H01M 4/02* (2006.01)

(52) Cooperative Patent Classification (CPC):
C01B 32/05; C01B 32/168; C01B 32/312;
H01G 11/24; H01G 11/30; H01G 11/34;
H01G 11/36; H01G 11/42; H01M 4/133;
H01M 4/134; H01M 4/364; H01M 4/386;
H01M 4/587; H01M 4/625; H01M 10/0525;   (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023   CN 202310785771**

(71) Applicant: **Ningde Amperex Technology Limited Ningde City, Fujian Province 352100 (CN)**

(72) Inventors:
• **SHAO, Wenlong**
  **Ningde City, Fujian Province, People s Republic of**
  **China, 352100 (CN)**

• **YI, Zheng**
  **Ningde City, Fujian Province, People s Republic of**
  **China, 352100 (CN)**
• **TAN, Fujin**
  **Ningde City, Fujian Province, People s Republic of**
  **China, 352100 (CN)**
• **XIE, Yuansen**
  **Ningde City, Fujian Province, People s Republic of**
  **China, 352100 (CN)**

(74) Representative: **Icosa**
**83 avenue Denfert-Rochereau**
**75014 Paris (FR)**

(54) **POROUS CARBON MATERIAL AND PREPARATION METHOD THEREOF, SILICON-CARBON MATERIAL, AND ELECTROCHEMICAL APPARATUS**

(57) A porous carbon material includes carbon nanotubes and carbon material particles, a particle elastic modulus of the porous carbon material is Y1, and 0.9 Gpa≤Y1≤5.0 Gpa. The porous carbon material of this application has a high particle elastic modulus and a high powder conductivity. When a silicon-carbon material prepared using the porous carbon material in this application as a skeleton is used in an electrochemical apparatus, the silicon-carbon material can have a high particle elastic modulus and powder conductivity, improving the electrochemical performance of the electrochemical apparatus such as the long cycling performance and rate performance.

FIG. 1A

**(Cont. next page)**

EP 4 484 372 A1

(52) Cooperative Patent Classification (CPC): (Cont.)
C01B 2202/36; H01M 2004/021; H01M 2004/027;
Y02E 60/10

**Description**

**TECHNICAL FIELD**

This application relates to the field of electrochemical technologies, and in particular, to a porous carbon material and a preparation method thereof, a silicon-carbon material, and an electrochemical apparatus.

**BACKGROUND**

The porous material is a type of material with a network structure composed of interconnected or closed pores, featuring strong adsorption. The porous material has been widely applied in fields such as gas purification, gas separation, and wastewater treatment, and also in industrial production and people's daily life.

The porous carbon material, as a type of porous material, has been widely studied due to its advantages such as abundant sources, low costs, and easy preparation. Typically, porous carbon materials applied in different fields exhibit significant difference in specific surface area and pore diameter structure, making it difficult to balance the specific surface area, pore volume characteristic, and particle elastic modulus performance of the porous carbon material.

**SUMMARY**

Embodiments of this application provide a porous carbon material, and a preparation method and usage thereof. The porous carbon material has a significantly increased particle elastic modulus.

According to a first aspect, this application provides a porous carbon material including carbon nanotubes and carbon material particles, where a particle elastic modulus of the porous carbon material is Y1, and Y1 satisfies 0.9 Gpa$\leq$Y1$\leq$5.0 Gpa.

In some example embodiments, a diameter of the carbon nanotubes is L1, and L1 satisfies 0.005 $\mu$m$\leq$L1$\leq$0.05 $\mu$m.

In some example embodiments, the carbon material particles satisfy at least one of the following conditions:

(1) a sphericity of the carbon material particles is D, and D satisfies 0.4$\leq$D$\leq$0.99; or
(2) a particle size $D_y50$ of the carbon material particles satisfies 1 $\mu$m$\leq$$D_v50$$\leq$20 $\mu$m.

In some example embodiments, a specific surface area of the porous carbon material is $\varepsilon$, and $\varepsilon$ satisfies 1300 $m^2/g$$\leq$$\varepsilon$$\leq$2800 $m^2/g$.

In some example embodiments, a total pore volume of the porous carbon material is P0 cc/g, a pore volume of pores with a diameter <2 nm in the porous carbon material is P1 cc/g, and a pore volume of pores with a diameter <1 nm in the porous carbon material is P2 cc/g, where P0, P1, and P2 are all pore volumes calculated by a single point method; and the porous carbon material satisfies at least one of the following conditions:

$$(1)\ 0.5{\leq}P0{\leq}2.0;$$

$$(2)\ 0.7{\leq}P1/P0{\leq}0.99;$$

or

$$(3)\ 0.05{\leq}P2/P0{\leq}0.5.$$

In some example embodiments, the porous carbon material satisfies at least one of the following conditions:

$$(1)\ 0.4{\leq}P1{\leq}1.3;$$

or

$$(2)\ 0.01{\leq}P2{\leq}0.6.$$

In some example embodiments, a powder conductivity of the porous carbon material under a pressure of 130 MPa is $\rho$, and $\rho$ satisfies 3 S/cm$\leq\rho\leq$30 S/cm.

In some example embodiments, a quantity of pores on a cross section of a single particle of the porous carbon material is m, and $0\leq m\leq3$; and a diameter of a pore on a cross section of a single particle of the porous carbon material is H, and H satisfies 100 nm<H<2000 nm.

In some example embodiments, the porous carbon material is observed using a scanning electron microscope image, where in a 50 $\mu$m$\times$50 $\mu$m region, one of the carbon nanotubes penetrates no more than four of the carbon material particles, and a quantity of carbon nanotubes in one of the carbon material particles is 1 to 10.

According to a second aspect, this application provides a preparation method of a porous carbon material, including:

mixing carbon nanotubes, a carbon material precursor, and a curing agent to uniformity at a preset mass percentage and increasing temperature to a first reaction temperature $T_1$ in a first protective atmosphere to perform programmed curing treatment, so as to obtain a mixed precursor;

performing carbonization treatment on the mixed precursor in a second protective atmosphere at a second reaction temperature $T_2$ to obtain a carbonized pre-treatment material; and

crushing and sieving the carbonized pre-treatment material, followed by activation treatment in a third protective atmosphere at a third reaction temperature $T_3$, to obtain a porous carbon material; where

a particle elastic modulus of the porous carbon material is Y1, and Y1 satisfies 0.9 Gpa$\leq$Y1$\leq$5.0 Gpa.

In some example embodiments, the preset mass percentage is a mass percentage C of the carbon nanotubes in the mixed precursor, and C satisfies 1%$\leq$C$\leq$6%.

In some example embodiments, the carbon material precursor includes at least one of epoxy resin, phenolic resin, melamine resin, polyaniline, polyacrylonitrile, polyvinylidene chloride, asphalt, coal tar, bisphenol A, or hexamethylenetetramine.

In some example embodiments, the programmed curing treatment includes:

a multi-step heating curing process, where the multi-step heating curing process includes: heating to 80°C at a rate of 2°C/min to 5°C/min, heating to 100°C at a rate of 1°C/min to 3°C/min, keeping 100°C for a first heat preservation time $t_y$, then heating to the first reaction temperature $T_1$ at a rate of 1°C/min to 3°C/min, and keeping $T_1$ for a first time t1.

In some example embodiments, the first reaction temperature $T_1$ satisfies 100°C$\leq$T1$\leq$200°C; and a time for the programmed curing treatment is a first time t1, t1 satisfying 8 h$\leq$t1$\leq$12 h; and/or

the second reaction temperature T2 satisfies 900°C$\leq$T2$\leq$1300°C; and a time for the carbonization treatment is a second time t2, t2 satisfying 1 h$\leq$t2$\leq$4 h; and/or

the third reaction temperature T3 satisfies 900°C$\leq$T3$\leq$1000°C; and a time for the activation treatment is a third time t3, t3 satisfying 10 h$\leq$t3$\leq$14 h.

In some example embodiments, the first protective atmosphere is an oxygen/nitrogen mixture, where an oxygen percentage being 10-20%, and/or

the second protective atmosphere is one of nitrogen and argon; and/or

the third protective atmosphere is one of carbon dioxide, carbon dioxide/oxygen, carbon dioxide/nitrogen, carbon dioxide/oxygen/nitrogen, and water vapor/carbon dioxide, where a carbon dioxide percentage being 50% to 100%.

According to a third aspect, this application provides a silicon-carbon material, where the silicon-carbon material is the foregoing porous carbon material; and/or includes any type of porous carbon material prepared using the foregoing preparation method.

According to a fourth aspect, this application provides an electrochemical apparatus including a positive electrode, an electrolyte, a separator, and a negative electrode. The negative electrode includes a current collector and a negative electrode active material layer, and the negative electrode active material layer includes the foregoing silicon-carbon material.

Based on the porous carbon material, the silicon-carbon material, and the electrochemical apparatus according to some embodiments of this application, this application at least has the following beneficial effects:

The porous carbon material prepared in this application has a high specific surface area and uniform pore size distribution, as well as high particle elastic modulus and powder conductivity.

When the silicon-carbon material prepared using the porous carbon material in this application as a skeleton is used in the electrochemical apparatus, the silicon-carbon material can have a high particle elastic modulus and powder conductivity, improving the electrochemical performance of the electrochemical apparatus such as the long cycling performance and rate performance.

## BRIEF DESCRIPTION OF DRAWINGS

To describe the technical solutions in some embodiments of this application more clearly, the following briefly describes the accompanying drawings required for describing some embodiments. Apparently, the accompanying drawings in the following descriptions show only some embodiments of this application, and persons skilled in the art may still derive others drawings based on these accompanying drawings.

FIG. 1A is a scanning electron microscope image of a particle cross section of a porous carbon material prepared in example 1-8;
FIG. 1B is a scanning electron microscope image of a particle cross section of a porous carbon material prepared in example 1-9;
FIG. 2 is an X-ray diffraction pattern of a porous carbon material prepared in example 1-8;
FIG. 3 shows a nitrogen adsorption/desorption curve of a porous carbon material prepared in example 1-8;
FIG. 4 shows a curve of pore diameter-accumulated pore volume distribution of a porous carbon material prepared in example 1-8;
FIG. 5 shows a nitrogen adsorption/desorption curve of a porous carbon material prepared in example 1-21; and
FIG. 6 shows a curve of pore diameter-accumulated pore volume distribution of a porous carbon material prepared in example 1-21.

## DETAILED DESCRIPTION

To make the objectives, technical solutions, and advantages of this application more comprehensible, the following further describes this application in detail with reference to some embodiments. It should be understood that specific embodiments described herein are merely used to explain this application but are not intended to limit this application.

Some embodiments of this application provide a porous carbon material including carbon nanotubes and carbon material particles, where a particle elastic modulus of the porous carbon material is Y1, and Y1 satisfies $1.0\ Gpa \leq Y1 \leq 5.0\ Gpa$. Preferably, Y1 satisfies $0.5\ Gpa \leq Y1 \leq 2.0\ Gpa$. In the porous carbon material of this application, the carbon nanotubes are mainly interspersed in the carbon material particles to form a microscopic interpenetrating network structure, conducive to increasing the particle elastic modulus of the porous carbon material.

In the porous carbon material of some embodiments of this application, a small number of carbon nanotubes are at a surface layer of the porous carbon material and the carbon nanotubes and the carbon material particles form an interpenetrating network structure. This facilitates selection of carbon material particles with a proper pore structure for compounding with the carbon nanotubes, which helps to obtain a porous carbon material that has high tenacity and uniform pore size distribution, but no obvious large pores on the cross section, and is suitable for use in the electrochemical apparatus to improve energy storage of the electrochemical apparatus.

In some example embodiments, a powder conductivity of the porous carbon material under a pressure of 130 MPa is $\rho$, and $\rho$ satisfies $1\ S/cm \leq \rho \leq 30\ S/cm$. Preferably, $\rho$ satisfies $5\ S/cm \leq \rho \leq 20\ S/cm$.

In some example embodiments, a diameter of the carbon nanotubes is L1, and L1 satisfies $0.005\ \mu m \leq L1 \leq 0.05\ \mu m$. The diameter of the carbon nanotubes being in this range facilitates uniform distribution of the carbon nanotubes, allowing the porous carbon material to obtain a proper specific surface area and pore volume while increasing the powder conductivity and particle strength of the porous carbon material, thus increasing the powder conductivity and particle strength of the silicon-carbon material.

In some example embodiments, a diameter of the porous carbon material is L2, and L2 is calculated based on a particle size $D_v50$ of the carbon material particle. The particle size $D_v50$ of the carbon material particles satisfy $1\ \mu m \leq D_v50 \leq 20\ \mu m$. The particle size $D_v50$ of the carbon material particles being in this range is conducive to shortening a deposition path of silicon. When the silicon-carbon material prepared from the porous carbon material is used in the electrochemical apparatus, the distribution uniformity of a negative electrode slurry during preparation and the deposition uniformity of silicon can be improved, and the volume swelling of the silicon-carbon material can be alleviated, thus improving the rate performance of the electrochemical apparatus.

In some example embodiments, a sphericity of the carbon material particles is D, and D satisfies $0.4 \leq D \leq 0.99$. When particles of the porous carbon material are closer to a spherical shape, gas adsorption is easier. When the porous carbon material is used for preparing the silicon-carbon material to be used in the electrochemical apparatus, the deposition uniformity of silicon can be improved. The spherical structure is more conducive to releasing stress during charge/discharge of the electrochemical apparatus, improving the long cycling performance of the electrochemical apparatus.

In some example embodiments, a specific surface area of the porous carbon material is $\varepsilon$, and $\varepsilon$ satisfies 1300 $m^2/g \le \varepsilon \le 2800\ m^2/g$. With the specific surface area of the porous carbon material in this range, the powder conductivity and the particle strength of the porous carbon material can be further increased, which is conducive to obtaining a silicon-carbon material with high silicon deposition.

In some example embodiments, the total pore volume of the porous carbon material calculated by the single point method is P0 cc/g, P0 satisfying $0.5 \le P0 \le 2.0$. The total pore volume of the porous carbon material being in the range helps the porous carbon material to obtain a high powder conductivity and particle strength, and helps to obtain a silicon-carbon material with high silicon deposition while alleviating the volume swelling of the silicon-carbon material during charge/discharge of the electrochemical apparatus.

In some example embodiments, the porous carbon material includes first pores, and a diameter of the first pore is S1, S1 satisfying S1<2 nm. A pore volume of the first pores calculated by the single point method is P1 cc/g, P0 and P1 satisfying $0.7 \le P1/P0 \le 0.99$. Further, $0.4 \le P1 \le 1.3$. The value of P1 of the porous carbon material being in this range is conducive to improving the particle tenacity of the porous carbon material, enhancing the particle strength, and alleviating the volume swelling of the silicon-carbon material during charge/discharge of the electrochemical apparatus.

In some example embodiments, the first pore includes second pores, and a diameter of the second pore is S2, S2 satisfying S2<1 nm. A pore volume of the second pores calculated by the single point method is P2 cc/g, P0 and P2 satisfying $0.05 \le P2/P0 \le 0.5$. Further, $0.01 \le P2 \le 0.6$. The value of P2 of the porous carbon material being in this range is conducive to improving deposition of silicon in the silicon-carbon material, thus improving the electrochemical performance of the silicon-carbon material in terms of lithium storage.

In some example embodiments, a quantity of pores on a cross section of a single compound particle of the porous carbon material is 0, which can further increase the particle strength and powder conductivity.

In some example embodiments, a quantity of pores on a cross section of one compound particle of the porous carbon material is m, and $0 < m \le 3$; and a diameter of the pore on the cross section of one compound particle of the porous carbon material is H, and H satisfies 100 nm<H<2000 nm. This can further ensure the particle strength and powder conductivity and also further alleviate volume swelling of the silicon-carbon material during charge/discharge of the electrochemical apparatus.

The porous carbon material is observed using a scanning electron microscope image, where in a 50 $\mu$m$\times$50 $\mu$m region, a quantity of carbon material particles penetrated by a single carbon nanotube is A, A satisfying $A \le 4$. The carbon nanotube penetrates through one carbon material particle, meaning that an end of the carbon nanotube is on a surface of the carbon material particle, including: the end of the carbon nanotube extending to the surface of the carbon material particle or out of the surface of the carbon material particle, for example, one end of the carbon nanotube being on a surface of the carbon material particle; or the carbon nanotube penetrating through one carbon material particle, that is, two ends of the carbon nanotube being both on the surface of the carbon material particle. A quantity of carbon nanotubes in a single carbon material particle is B, B satisfying $1 \le B \le 10$. The state of the carbon nanotubes present in a single carbon material particle includes: one carbon nanotube is entirely wrapped by one carbon material particle; one carbon nanotube has one end wrapped by one carbon material particle and the other end on the surface of the carbon material particle; or one carbon nanotube has the middle portion wrapped by one carbon material particle and two ends on the surface of the carbon material particle.

Some embodiments of this application further provide a preparation method of a porous carbon material, including the following steps:

Step S201: Mix the carbon nanotubes, the carbon material precursor, and a curing agent uniformly at a preset mass percentage and increase a first reaction temperature to a first reaction temperature $T_1$ in a first protective atmosphere to perform programmed curing treatment, so as to obtain a mixed precursor.

Step S202: Perform carbonization treatment on the mixed precursor in a second protective atmosphere at a second reaction temperature $T_2$ to obtain a carbonized pre-treatment material.

Step S203: Crush and sieve the carbonized pre-treatment material, followed by activation treatment in a third protective atmosphere at a third reaction temperature $T_3$, to obtain a porous carbon material. The porous carbon material has electrical conductivity, and a particle elastic modulus of the porous carbon material is Y1, Y1 satisfying $0.9\ Gpa \le Y1 \le 5.0\ Gpa$.

According to the preparation method of the porous carbon material in some embodiments of this application, raw materials containing the carbon nanotubes and the precursor are mixed uniformly, and the curing treatment and activation treatment are performed to obtain a porous carbon material having a high powder conductivity, high tenacity, and no obviously large pores. A small number of carbon nanotubes are at a surface layer of the porous carbon material, and the carbon nanotubes and the carbon material particles form an interpenetrating network structure. This facilitates selection of carbon nanotubes with a proper pore structure for compounding with the carbon material particles, thus obtaining a porous carbon material that has high tenacity and uniform pore size distribution, but no obviously large pores on the cross section, and is suitable for gas storage and use in the electrochemical apparatus to improve energy storage of the electrochemical apparatus.

In step S201, the first reaction temperature $T_1$ satisfies 100°C≤T1≤200°C; and a time for the programmed curing treatment is a first time $t_1$, $t_1$ satisfying 8 h≤$t_1$≤12 h. The first reaction temperature and the first reaction time being in the foregoing ranges can ensure that the mixed precursor is fully cured, no obvious bubbles are generated during curing, and the strength of the cured mixed precursor is high. This is conducive to obtaining a porous carbon material with high particle strength.

In step S202, the second reaction temperature $T_2$ satisfies 900°C≤$T_2$≤1300°C; and a time for the carbonization treatment is a second time $t_2$, $t_2$ satisfying 1 h≤$t_2$≤4 h. The second reaction temperature and the second reaction time being in the foregoing ranges can ensure that the mixed precursor is carbonized fully to obtain a porous carbon material with a high powder conductivity.

In step S203, the third reaction temperature $T_3$ satisfies 900°C≤$T_3$≤1000°C; and a time for the activation treatment is a third time $t_3$, $t_3$ satisfying 10 h≤$t_3$≤14 h. The third reaction temperature and the third reaction time being in the foregoing ranges helps to obtain a porous carbon material with a high specific surface area and pore volume, and also ensures that the porous carbon material has high particle strength and powder conductivity, thus obtaining a silicon-carbon material with a high capacity and a low swelling rate.

The programmed curing treatment includes a multi-step heating curing process, where the multi-step heating curing process includes: heating to 80°C at a rate of 2°C/min to 5°C/min, heating to 100°C at a rate of 1°C/min to 3°C/min, keeping 100°C for a first heat preservation time $t_y$, then heating to the first reaction temperature $T_1$ at a rate of 1°C/min to 3°C/min, and keeping $T_1$ for a first time t1. $t_y$ satisfies 60 min≤$t_y$≤180 min. The use of gradual heating is conducive to improving the uniformity of the pore diameters of the prepared porous carbon material.

The first protective atmosphere, the second protective atmosphere, and the third protective atmosphere may each be at least one of an inert gas or nitrogen.

In some example embodiments, the preset mass percentage is a mass percentage C of the carbon nanotubes in the mixed precursor, and C satisfies 1%≤C≤6%. This is conducive to increasing the particle elastic modulus and conductivity of the prepared porous carbon material.

The carbon material precursor includes at least one of epoxy resin, phenolic resin, melamine resin, polyaniline, polyacrylonitrile, polyvinylidene chloride, asphalt, coal tar, bisphenol A, or hexamethylenetetramine.

The curing agent includes at least one of HMT, urea, or melamine.

The porous carbon material prepared in this application has a high specific surface area and uniform pore size distribution, as well as high particle elastic modulus and powder conductivity.

When the silicon-carbon material prepared using the porous carbon material in this application as a skeleton is used in the electrochemical apparatus, the silicon-carbon material can have a high particle elastic modulus and powder conductivity, improving the electrochemical performance of the electrochemical apparatus such as the long cycling performance and rate performance of the electrochemical apparatus.

The following describes some embodiments of this application more specifically using examples and comparative examples. Various tests and evaluations are performed in the following methods. In addition, unless otherwise specified, "part" and "%" are based on weight.

I. Performance test methods for porous carbon material:

1. Particle elastic modulus test for porous carbon material

A nanoindentor (model: Hysitron TI 950) was used to test the hardness and elastic modulus of individual particles of the porous carbon material according to test standard JB/T 12721-2016. Before the test, powder was dispersed in epoxy resin for curing, the cured resin was cut through ion polishing, and a nanoprobe was used to apply pressure to individual particles of the porous carbon material. An indentation depth on the particle surface was monitored for the calculation of strength of individual particles of the porous carbon material. For the same sample, the elastic modulus of five particles were tested in parallel to take an average.

2. Conductivity test for porous carbon material

A powder conductivity meter (model: FT-8100) was used to measure the conductivity of solid powder of the porous carbon material based on the four-probe testing principle with reference to the standard GB/T1552-1995. A known amount of solid powder of the porous carbon material was used and its volume was compressed at a preset pressure value or intensity under hydraulic power. Resistance, resistivity, and conductivity of the solid powder of the porous carbon material were measured online, and data was recorded.

3. Particle size test for carbon material particles of porous carbon material

A Malvern particle size tester was used to measure a particle size of the powder of the porous carbon material: A powder material was dispersed in a dispersant ethanol and ultrasonicated for 30 minutes. The sample was put into the Malvern particle size tester to test $D_v50$ of the powder material.

4. Particle sphericity test for porous carbon material

A laser particle size analyzer (model: BT-2900) was used to analyze the sphericity of the solid powder of the porous carbon material based on the analysis method outlined in GB/T38887-2020. Electromagnetic vibration sample introduction and free-fall dispersion techniques were used to disperse the solid powder of porous carbon material. A high-speed CCD camera and image processing software for multithreading and edge recognition technology were used in combination to output the particle sphericity.

5. Inner diameter test for carbon nanotube

A field emission transmission electron microscope (model: FEI Tecnai F20) was used to analyze the inner diameter of the carbon nanotube: The solid powder of the porous carbon material was dispersed in a dispersant ethanol and ultrasonicated for 30 minutes. A small amount of the dispersant was drawn using a pipette and dropped onto a grating, and the grating was added into the field emission transmission electron microscope for testing the average inner diameter of the carbon nanotubes of the porous carbon material.

6. Specific surface area and pore volume test

The solid powder of the porous carbon material was taken into a sample tube, evacuated under vacuum at 100°C for degassing, and then kept for 12 hours. An ASAP 1460-physical adsorption analyzer was used to test capacities of the porous carbon material adsorbing nitrogen under different pressures, and isothermal lines of the adsorption and desorption were plotted. Based on the shape of the hysteresis loop, the shape of the pore was determined. A DFT model was used to fit the pore size distribution curve of micropores for calculation of the specific surface area, pore volume, and pore size distribution of the porous carbon material.

Example 1-1

The preparation method of the porous carbon material was as follows:
Linear phenolic resin, hexamethylenetetramine (HMT), and carbon nanotubes (CNT) were placed in a ball mill jar at a mass ratio of 94:6:2 and ball milled to be completely dispersed, obtaining a precursor material. A precursor material was placed in a programmed curing oven under protection of a first protective atmosphere (an oxygen/nitrogen mixture, in which the oxygen accounts for 10%) and subjected to programmed curing treatment: heating to 80°C at a rate of 5°C/min, heating to 100°C at a rate of 2°C/min, keeping 100°C for a first heat preservation time $t_{y1}$ ($t_{y1}$=1 h), heating to a first reaction temperature $T_1$ ($T_1$=130°C) at a rate of 1°C/min, and reacting for a first time $t_1$ ($t_1$=10 h) at a first reaction temperature, followed by cooling and crushing to obtain a mixed precursor. A diameter L1 of the carbon nanotubes was 0.01 μm.

The mixed precursor was placed in a box furnace under protection of a second protective atmosphere (nitrogen), heated to a second reaction temperature $T_2$ ($T_2$=900°C) at a rate of 5°C/min, and reacted for a second time $t_2$ ($t_2$=2 h) at a second reaction temperature $T_2$ for carbonization treatment, followed by cooling to obtain a carbonized pre-treatment material.

The carbonized pre-treatment material was crushed to obtain powder, and the powder was sieved and classified based on the particle size to control the particle size $D_v50$ of the powder at 18 μm. Then, the classified powder was transferred into a rotary furnace under protection of a nitrogen atmosphere and heated to a third reaction temperature $T_3$ ($T_3$=900°C) at a rate of 5°C/min. Next, the nitrogen atmosphere was replaced with a third protective atmosphere (carbon dioxide), and after an activation time $t_3$ ($t_3$=10 h), the carbon dioxide was replaced with nitrogen. After cooling to the room temperature (25°C), a porous carbon material was obtained with a sphericity D of 0.4 and a diameter L2 of 18 μm.

Examples 1-1 to 1-6

These examples were the same as example 1-1 except that the preparation parameters of the porous carbon material were adjusted according to Table a.

**Table a**

| Item | Precursor mass ratio |
|---|---|
| Comparative example 1-1 | 94:6:0 |
| Example 1-1 | 94:6:2 |
| Example 1-2 | 94:6:4 |
| Example 1-3 | 94:6:6 |
| Example 1-4 | 92:8:4 |
| Example 1-5 | 91:9:4 |
| Example 1-6 | 90:10:4 |

Examples 1-7 to 1-12

These examples were the same as example 1-4 except that the preparation parameters of the porous carbon material were adjusted according to Table b.

**Table b**

|  | $T_2$ | $T_3$ | $t_3$ |
|---|---|---|---|
| Example 1-7 | 1100 | 900 | 10 |
| Example 1-8 | 1300 | 900 | 10 |
| Example 1-9 | 900 | 950 | 10 |
| Example 1-10 | 900 | 1000 | 10 |
| Example 1-11 | 900 | 900 | 14 |
| Example 1-12 | 900 | 1000 | 14 |

Example 1-13

The preparation method of the porous carbon material was as follows:
Bisphenol A, hexamethylenetetramine (HMT), and carbon nanotubes (CNT) were placed in a ball mill jar at a mass ratio of 90:10:4 and ball milled to be completely dispersed, so as to obtain a precursor material. A precursor material was placed in a programmed curing oven under protection of a first protective atmosphere (nitrogen) and subjected to programmed curing treatment: heating to 80°C at a rate of 5°C/min, heating to 100°C at a rate of 2°C/min, keeping 100°C for a first heat preservation time $t_{y1}$ ($t_{y1}$=1 h), heating to a first reaction temperature $T_1$ ($T_1$=180°C) at a rate of 1°C/min, and reacting for a first time $t_1$ ($t_1$=10 h) at a first reaction temperature, followed by cooling and crushing to obtain a mixed precursor. A diameter L1 of the carbon nanotubes was 0.01 $\mu$m.
The mixed precursor was placed in a box furnace under protection of a second protective atmosphere (nitrogen), heated to a second reaction temperature $T_2$ ($T_2$=900°C) at a rate of 5°C/min, and reacted for a second time $t_2$ ($t_2$=2 h) at a second reaction temperature $T_2$ for carbonization treatment, followed by cooling to obtain a carbonized pre-treatment material.
The carbonized pre-treatment material was crushed to obtain powder, and the powder was sieved and classified based on the particle size to control the particle size $D_v50$ of the powder at 15 $\mu$m. Then, the classified powder was transferred into a rotary furnace under protection of a nitrogen atmosphere and heated to a third reaction temperature $T_3$ ($T_3$=950°C) at a rate of 5°C/min. Next, the nitrogen atmosphere was replaced with a third protective atmosphere (carbon dioxide), and after an activation time $t_3$ ($t_3$=10 h), the carbon dioxide was replaced with nitrogen. After cooling to the room temperature (25°C), a porous carbon material was obtained with a sphericity D of 0.6 and a particle diameter L2 of 15 $\mu$m.

Examples 1-14 to 1-23

These examples were the same as example 1-13 except that the preparation parameters of the porous carbon material were adjusted according to Table c, $T_1$ during preparation was 150°C in example 1-22, and $T_1$ during preparation was 120°C in example 1-23.

**Table c**

| Item | Mixed precursor | Precursor ratio |
|---|---|---|
| Example 1-13 | Bisphenol A:HMT:CNT | 90:10:4 |
| Example 1-14 | Bisphenol A:HMT:CNT | 60:40:4 |
| Example 1-15 | Bisphenol A:HMT:CNT | 50:50:4 |
| Example 1-16 | Epoxy resin:urea:CNT | 90:10:4 |
| Example 1-17 | Melamine resin:urea:CNT | 90:10:4 |
| Example 1-18 | Polyaniline:urea:CNT | 90:10:4 |
| Example 1-19 | Polyacrylonitrile:melamine:CNT | 90:10:4 |
| Example 1-20 | Asphalt:melamine:CNT | 90:10:4 |
| Example 1-21 | Polyvinylidene chloride:melamine:CNT | 90:10:4 |
| Example 1-22 | Bisphenol A:HMT:CNT | 90:10:4 |
| Example 1-23 | Bisphenol A:HMT:CNT | 90:10:4 |

Comparative example 1-1

This example was the same as example 1-1 except that the mixed precursor did not include carbon nanotubes (CNT).

Comparative example 1-2

This example was the same as example 1-1 except that a coconut shell substituted for the precursor material used in example 1-1 for preparation of the porous carbon material.

Comparative example 1-3

This example was the same as example 1-1 except that asphalt substituted for the precursor material used in example 1-1 for preparation of the porous carbon material.

Examples 2-1 to 2-5

These examples were the same as example 1-5 except that the diameter L2 ($D_v50$) and sphericity D of the particle of the porous carbon material were adjusted.
Test data of examples and comparative examples are shown in Tables 1 to 4.

**Table 1**

| Item | Precursor mass ratio | Particle elastic modulus Y1 (Gpa) | Powder conductivity ρ (S/cm) | Specific surface area ε (m²/g) | Total pore volume P0 (cc/g) | Pore volume P1 of first pores (cc/g) | P1/P0 (%) | Pore volume P2 of second pores (cc/g) | P2/P0 (%) |
|---|---|---|---|---|---|---|---|---|---|
| Comparative example 1-1 | 94:6:0 | 2.8 | 3.1 | 2139 | 0.97 | 0.90 | 93% | 0.38 | 39% |
| Example 1-1 | 94:6:2 | 3.5 | 12.3 | 2087 | 0.93 | 0.86 | 93% | 0.35 | 38% |
| Example 1-2 | 94:6:4 | 4.9 | 19.8 | 2048 | 0.91 | 0.86 | 95% | 0.38 | 42% |
| Example 1-3 | 94:6:6 | 3.7 | 29.8 | 2103 | 0.94 | 0.84 | 89% | 0.36 | 38% |
| Example 1-4 | 92:8:4 | 3.9 | 18.7 | 2373 | 1.18 | 1.00 | 85% | 0.42 | 36% |
| Example 1-5 | 91:9:4 | 3.4 | 17.8 | 2448 | 1.21 | 1.02 | 84% | 0.44 | 36% |
| Example 1-6 | 90:10:4 | 2.9 | 15.3 | 2631 | 1.24 | 1.02 | 82% | 0.41 | 33% |
| Comparative example 1-2 | - | 0.4 | 1.3 | 1753 | 0.69 | 0.46 | 67% | 0.16 | 23% |
| Comparative example 1-3 | - | 0.6 | 1.5 | 1521 | 0.71 | 0.50 | 70% | 0.18 | 25% |

Referring to Table 1, it can be seen from examples 1-1 to 1-3, comparative example 1, and comparative example 2 that introduction of CNT is conducive to increasing the particle elastic modulus and powder conductivity of particles. It can be seen from example 1-2, examples 1-4 to 1-6, comparative example 1, and comparative example 2 that the ratio of the first carbon material, the curing agent, and CNT exerts significant effect on the structure of the porous carbon material, which is manifested in the changes in the specific surface area, the pore volume, the powder conductivity, the particle elastic modulus, and the like

The curing agent chemically reacts with the carbon material precursor to crosslink and form a stable crosslinking polymer. This can significantly increase the residual carbon content and skeleton strength of the porous carbon material. The curing agent can also serve as a pore-forming agent to optimize the pore structure and improve the specific surface area and pore volume of the porous carbon material. The increase of the curing agent is conducive to increasing the specific surface area $\varepsilon$ and pore volume of the porous carbon material. The increase of the pore volume is mainly manifested in pores of 1 nm-2 nm and mesopores (pores with a diameter greater than 2 nm). In addition, the use of the resin system in combination with a curing agent can control the percentage of micropores (pores with a diameter less than 2 nm) of the porous carbon material to be greater than 80%, with narrow pore size distribution and most of the pores being micropores. This percentage is far greater than that of a porous carbon material prepared from only asphalt or biology base.

The introduction of CNT also changes the process of the programmed curing reaction, affecting the pore structure. It can be seen from examples 1-1 to 1-3 and comparative example 1 that when the mass percentage C of the carbon nanotubes in the mixed precursor satisfies 1%≤C≤6%, the powder conductivity $\rho$ and particle elastic modulus Y1 of the porous carbon material are both improved significantly.

**Table 2**

| Item | $T_2$ | $T_3$ | $t_3$ | Particle elastic modulus Y1 (Gpa) | Powder conductivit y ρ (S/cm) | Specific surface area ε (m²/g) | Total pore volume P0 (cc/g) | Pore volume P1 of first pores (cc/g) | P1/P0 (%) | Pore volume P2 of second pores (cc/g) | P2/P0 (%) |
|---|---|---|---|---|---|---|---|---|---|---|---|
| Example 1-7 | 1100 | 900 | 10 | 3.8 | 25.8 | 1821 | 0.76 | 0.71 | 93% | 0.31 | 41% |
| Example 1-8 | 1300 | 900 | 10 | 4.1 | 26.1 | 1780 | 0.72 | 0.68 | 94% | 0.30 | 42% |
| Example 1-9 | 900 | 950 | 10 | 1.7 | 7.9 | 2653 | 1.41 | 1.04 | 74% | 0.27 | 19% |
| Example 1-10 | 900 | 1000 | 10 | 1.2 | 6.1 | 2710 | 1.52 | 1.08 | 71% | 0.21 | 14% |
| Example 1-11 | 900 | 900 | 14 | 1.6 | 7.4 | 2685 | 1.43 | 1.04 | 73% | 0.27 | 19% |
| Example 1-12 | 900 | 1000 | 14 | 0.9 | 5.5 | 2780 | 1.67 | 1.17 | 70% | 0.20 | 12% |

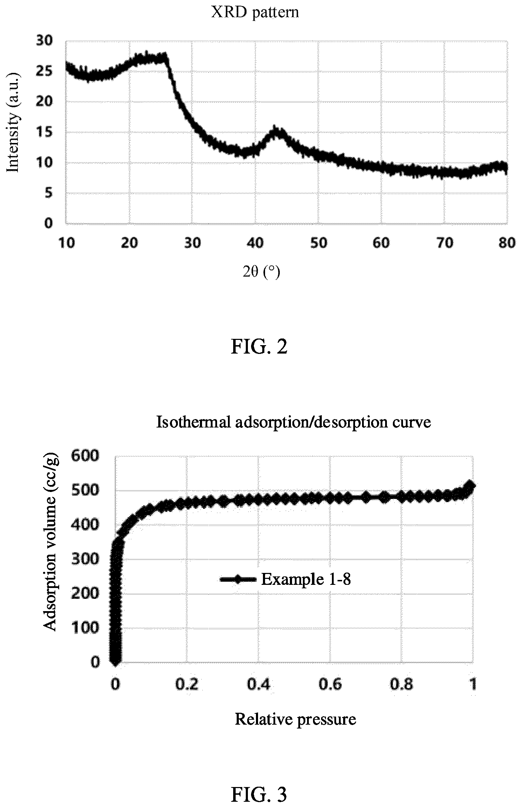

Referring to FIG. 2, it can be seen from examples 1-7 to 1-12 that the second reaction temperature $T_2$, the third reaction temperature $T_3$, and the third reaction time $t_3$ exert significant effect on the specific surface area $\varepsilon$, pore volume, powder conductivity, and particle elastic modulus of the porous carbon material. When the second reaction temperature $T_2$ rises, the particle elastic modulus Y1 and powder conductivity $\rho$ of the porous carbon material increase significantly. This is mainly manifested in the increased pyrolysis and improved graphitization of the porous carbon material. When the third reaction temperature $T_3$ rises, the specific surface area $\varepsilon$ and pore volume of the porous carbon material increase. This is mainly manifested in the increase of the pore volumes of some mesopores (pores with a diameter greater than 2 nm). When the third reaction time $t_3$ is prolonged, the specific surface area $\varepsilon$ and pore volume of the porous carbon material increase. This is mainly manifested in the volume increase of the pores of 1-2 nm and mesopores (pores with a diameter greater than 2 nm).

**Table 3**

| Item | Mixed precursor | Precursor ratio | Sphericity | Total pore volume P0 (cc/g) | Pore volume P1 of first pores (cc/g) | P1/P0 (%) | Pore volume P2 of second pores (cc/g) | P2/P0 (%) |
|---|---|---|---|---|---|---|---|---|
| Example 1-13 | Bisphenol A: HMT:CNT | 90:10:4 | 0.6 | 0.75 | 0.73 | 97% | 0.37 | 49% |
| Example 1-14 | Bisphenol A: HMT:CNT | 60:40:4 | 0.6 | 0.77 | 0.73 | 95% | 0.35 | 45% |
| Example 1-15 | Bisphenol A: HMT:CNT | 50:50:4 | 0.6 | 0.83 | 0.73 | 88% | 0.31 | 37% |
| Example 1-16 | Epoxy resin: urea:CNT | 90:10:4 | 0.5 | 0.73 | 0.65 | 89% | 0.06 | 8% |
| Example 1-17 | Melamine resin: urea:CNT | 90:10:4 | 0.4 | 1.47 | 1.23 | 84% | 0.54 | 37% |
| Example 1-18 | Polyaniline:urea: CNT | 90:10:4 | 0.6 | 0.72 | 0.65 | 90% | 0.18 | 25% |
| Example 1-19 | Polyacrylonitrile: melamine:CNT | 90:10:4 | 0.9 | 1.02 | 0.84 | 82% | 0.32 | 31% |
| Example 1-20 | Asphalt: melamine:CNT | 90:10:4 | 0.7 | 0.72 | 0.59 | 82% | 0.17 | 23% |
| Example 1-21 | Polyvinylidene chloride: melamine:CNT | 90:10:4 | 0.9 | 1.14 | 1.13 | 99% | 0.57 | 50% |
| Example 1-22 | Bisphenol A: HMT:CNT | 90:10:4 | 0.6 | 0.74 | 0.62 | 84% | 0.18 | 24% |
| Example 1-23 | Bisphenol A: HMT:CNT | 90:10:4 | 0.6 | 0.71 | 0.53 | 75% | 0.13 | 18% |

Referring to Table 3, it can be seen from example 1-13 and example 1-23 that replacing the mixed precursor exerts significant effect on the structure of the porous carbon material, and first reaction temperatures $T_1$ suitable for different mixed precursors also differ. When the precursor includes materials such as polyacrylonitrile, polyvinylidene, and asphalt, after hot treatment, the porous carbon material has significantly increased sphericity D and its particles are closer to a sphere, and the percentage of micropores (pores with a diameter less than or equal to 2 nm, that is, first pores) in the porous carbon material is greater than 80%. The particles of the porous carbon material are closer to a sphere and the percentage of micropores increases. This facilitates gas adsorption and uniform deposition of silicon. The spherical structure is more conducive to releasing stress during charge/discharge of the electrochemical apparatus.

**Table 4**

| Item | Diameter L2 of carbon material particle | Sphericity D of carbon material particle | Particle elastic modulus Y1 (Gpa) | Powder conductivity $\rho$ (S/cm) | Specific surface area $\varepsilon$ (m²/g) |
|---|---|---|---|---|---|
| Example 1-4 | 12 | 0.5 | 3.9 | 18.7 | 2373 |
| Example 2-1 | 9 | 0.5 | 4.3 | 16.3 | 2421 |
| Example 2-2 | 5 | 0.5 | 4.6 | 15.1 | 2538 |
| Example 2-3 | 12 | 0.4 | 3.6 | 17.4 | 2349 |
| Example 2-4 | 12 | 0.7 | 4.5 | 19.6 | 2366 |
| Example 2-5 | 12 | 0.9 | 4.8 | 22.5 | 2371 |

Referring to Table 4, it can be seen from example 1-4, example 2-1, and example 2-2 that controlling the sphericities D of the particles of the porous carbon material to be the same and reducing the diameter L2 of the particles of the porous carbon material (calculated based on $D_v50$) increase the particle elastic modulus Y1 of the porous carbon material, the gap between particles, and the specific surface area $\varepsilon$, but reduce the powder conductivity $\rho$ of the particles. Preferably, 9 $\mu$m≤L2≤12 $\mu$m. In example 1-4 and examples 2-3 to 2-5, the diameters L2 of the particles of the porous carbon material are controlled to be the same and the sphericities D of the particles of the porous carbon material are adjusted. It can be seen that as the sphericity D of the particle increases, the specific surface areas $\varepsilon$ of the particles are more approximate, and because the spherical shape can better release stress, the contact between particles becomes closer, and the particle strength Y1 and the powder conductivity $\rho$ increase. Preferably, 0.7≤D≤0.9.

In summary, the porous carbon material of this application, with carbon nanotubes (CNT) contained in its porous skeleton, has a stable skeleton structure and higher conductivity. When the particle size, sphericity, specific surface area, and pore volume of the porous carbon material are in the ranges of this application, the particle elastic modulus and powder conductivity of the porous carbon material can be further improved, and the pore size distribution is more uniform (a larger value of P1/P0 leads to more uniform pore size distribution of the porous carbon material). When a silicon-carbon material including the porous carbon material of this application is applied to an electrochemical apparatus, the negative electrode active material has higher gram capacity and lower volume swelling.

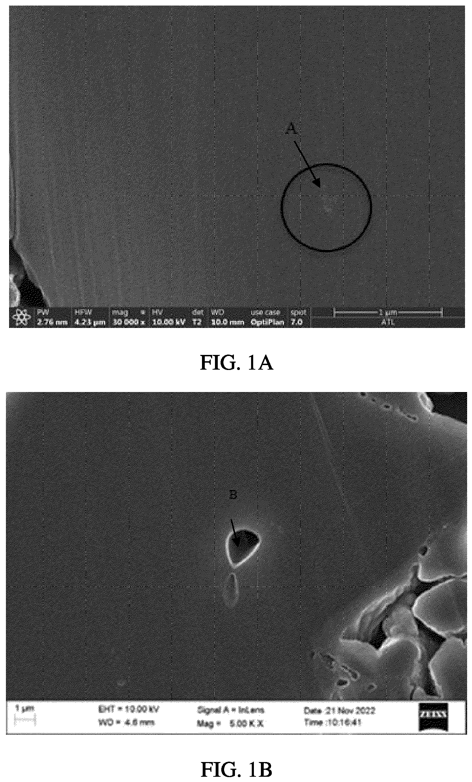

FIG. 1A is a scanning electron microscope image of a particle cross section of a porous carbon material prepared in example 1-8. Position A in FIG. 1A is a pore structure, representing a through hole on the particle cross section formed by CNT, with a diameter of 0.005-0.05 $\mu$m. The number of through holes is not more than 10, and there are no pores with a diameter greater than 100 nm on the particle cross section, indicating that CNTs are distributed in the porous carbon material, thus enhancing the skeleton of the porous carbon material. FIG. 1B is a scanning electron microscope image of a particle cross section of a porous carbon material prepared in example 1-9. Position B in FIG. 1B is a through hole with a diameter greater than 100 nm. No more than three through holes with a diameter greater than 100 nm are present on the particle surface, helping to further enhance the particle strength of the porous carbon. FIG. 2 is an XRD (X-ray diffraction, X-ray diffraction) pattern of a porous carbon material prepared in example 1-8. As shown in FIG. 3, a peak near 26° is a characteristic peak corresponding to the carbon nanotubes, and broad peaks near 23° to 26° and 43° are characteristic peaks corresponding to the carbon material particles.

FIG. 3 shows an isothermal adsorption/desorption curve of a porous carbon material prepared in example 1-8. It can be seen that the material exhibits significant gas adsorption in a low-pressure region with a low relative pressure, indicating that the interior of the material primarily consists of micropores (pores with a diameter less than or equal to 2 nm, that is, first pores). The adsorption/desorption curve shows no obvious hysteresis loop, indicating that there are no apparent mesopores (pores with a diameter greater than 2 nm) inside the material. The specific surface area of the porous carbon material obtained through fitting of the adsorption/desorption test curve is 1780 m²/g, and the total pore volume calculated by the single point method is 0.72 cc/g.

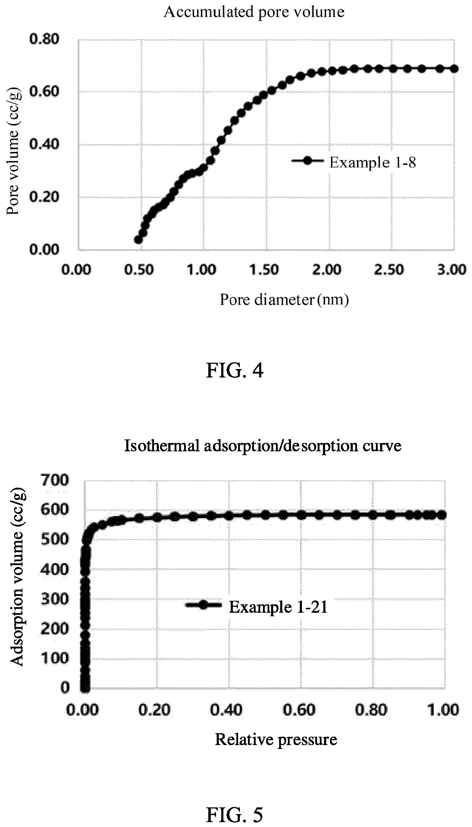

FIG. 4 shows a pore diameter-accumulated pore volume curve of a porous carbon material prepared in example 1-8. It can be seen that in correspondence to a nitrogen adsorption/desorption curve, the pore size distribution of the porous carbon material is mainly concentrated in the micropore region. The pore volume of the pores with a diameter less than 2 nm in the material is 0.68 cc/g, accounting for 94% of the total pore volume, and the pore volume of the pores with a diameter less than 1 nm in the material is 0.31 cc/g, accounting for 42% of the total pore volume.

FIG. 5 shows a curve of an isothermal adsorption/desorption curve of a porous carbon material prepared in example 1-21. It can be seen that the material exhibits significant gas adsorption in a low-pressure region, indicating that the interior of the porous carbon material primarily consists of micropores. In the adsorption/desorption curve, when the relative pressure is greater than 0.2, the porous carbon material absorbs no gas, indicating that there are almost no mesopores (pores with a diameter greater than 2 nm) in the porous carbon material. The specific surface area of the material obtained through fitting of the adsorption/desorption test curve is 2219 $m^2$/g, and the pore volume calculated by the single point method is 1.14 cc/g.

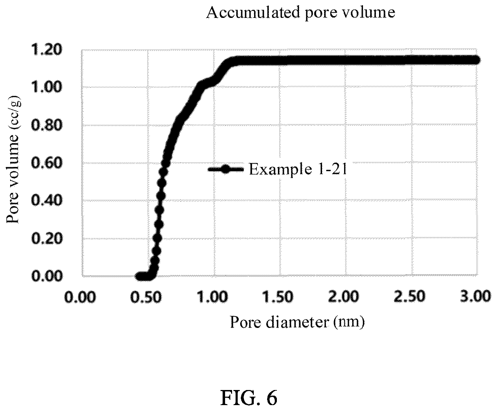

FIG. 6 shows a pore diameter-accumulated pore volume curve of a porous carbon material prepared in example 1-21. It can be seen that in correspondence to a nitrogen adsorption/desorption curve, the pore size distribution of the porous carbon material is mainly concentrated in the micropore region. The pore volume of the pores with a diameter less than 2 nm in the material is 1.13 cc/g, accounting for 99% of the total pore volume, and the pore volume of the pores with a diameter less than 1 nm in the material is 1.03 cc/g, accounting for 90 % of the total pore volume.

In the description of this application, a list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C.

The foregoing descriptions are merely preferable embodiments of this application, but are not intended to limit this application. Any modification, equivalent replacement, or improvement made without departing from the principle of this application shall fall within the protection scope of this application.

**Claims**

1. A porous carbon material, **characterized in that**, comprising carbon nanotubes and carbon material particles, wherein a particle elastic modulus of the porous carbon material is Y1, and 0.9 Gpa≤Y1≤5.0 Gpa.

2. The porous carbon material according to claim 1, **characterized in that**, a diameter of the carbon nanotubes is L1, and 0.005 $\mu$m≤L1≤0.05 $\mu$m.

3. The porous carbon material according to claim 1 or 2, **characterized in that**, the carbon material particles satisfy at least one of the following conditions:

   (1) a sphericity of the carbon material particles is D, and 0.4≤D≤0.99; or
   (2) a particle size $D_v$50 of the carbon material particles satisfies 1 $\mu$m≤$D_v$50≤20 $\mu$m.

4. The porous carbon material according to any one of claims 1 to 3, **characterized in that**, a specific surface area of the porous carbon material is ε, and 1300 $m^2$/g≤ε≤2800 m2/g.

5. The porous carbon material according to any one of claims 1 to 4, **characterized in that**,

   a total pore volume of the porous carbon material is P0 cc/g, a pore volume of pores with a diameter <2 nm in the porous carbon material is P1 cc/g, and a pore volume of pores with a diameter <1 nm in the porous carbon material is P2 cc/g, wherein P0, P1, and P2 are all pore volumes calculated by a single point method; and the porous carbon material satisfies at least one of the following conditions:

$$(1)\ 0.5 \leq P0 \leq 2.0;$$

$$(2)\ 0.7 \leq P1/P0 \leq 0.99;$$

or

$$(3)\ 0.05 \leq P2/P0 \leq 0.5.$$

**6.** The porous carbon material according to any one of claims 1 to 5, **characterized in that**, the porous carbon material satisfies at least one of the following conditions:

$$(1)\ 0.4 \leq P1 \leq 1.3;$$

or

$$(2)\ 0.01 \leq P2 \leq 0.6.$$

**7.** The porous carbon material according to any one of claims 1 to 6, **characterized in that**, a powder conductivity of the porous carbon material under a pressure of 130 MPa is $\rho$, and S/cm$\leq\rho\leq$30 S/cm.

**8.** The porous carbon material according to any one of claims 1 to 7, **characterized in that**, a quantity of pores on a cross section of a single particle of the porous carbon material is m, and $0<m\leq3$; and a diameter of a pore on a cross section of a single particle of the porous carbon material is H, and 100 nm$<$H$<$2000 nm.

**9.** The porous carbon material according to any one of claims 1 to 8, **characterized in that**, the porous carbon material is observed using a scanning electron microscope image, wherein in a 50 $\mu$m$\times$50 $\mu$m region, one of the carbon nanotubes penetrates no more than four of the carbon material particles, and a quantity of carbon nanotubes in one of the carbon material particles is 1 to 10.

**10.** A silicon-carbon material, comprising a silicon material and the porous carbon material according to any one of claims 1 to 9.

**11.** An electrochemical apparatus, comprising a positive electrode, an electrolyte, a separator, and a negative electrode, wherein the negative electrode comprises a negative electrode active material layer, the negative electrode active material layer comprises a negative electrode active material, and the negative electrode active material comprises the silicon-carbon material according to claim 10.

**12.** A preparation method of the porous carbon material according to any one of claims 1 to 9, **characterized in that**, the method comprising:

mixing carbon nanotubes, a carbon material precursor, and a curing agent uniformly at a preset mass percentage and increasing a first reaction temperature to a first reaction temperature $T_1$ in a first protective atmosphere to perform programmed curing treatment, so as to obtain a mixed precursor;
performing carbonization treatment on the mixed precursor in a second protective atmosphere at a second reaction temperature $T_2$ to obtain a carbonized pre-treatment material; and
crushing and sieving the carbonized pre-treatment material, followed by activation treatment in a third protective atmosphere at a third reaction temperature $T_3$, to obtain the porous carbon material.

**13.** The preparation method of the porous carbon material according to claim 12, **characterized in that**, the preset mass percentage is: a mass percentage C of the carbon nanotubes in the mixed precursor, and 1%$\leq$C$\leq$6%.

**14.** The preparation method of the porous carbon material according to claim 12 or 13, **characterized in that**, the carbon material precursor comprises at least one of epoxy resin, phenolic resin, melamine resin, polyaniline, polyacrylonitrile, polyvinylidene chloride, asphalt, coal tar, bisphenol A, or hexamethylenetetramine.

**15.** The preparation method of the porous carbon material according to any one of claims 12 to 14, **characterized in that**,

the first reaction temperature T1 satisfies 100°C$\leq$T1$\leq$200°C; and a time for the programmed curing treatment is a first time t1, 8 h$\leq$t1$\leq$12 h; and/or
the second reaction temperature T2 satisfies 900°C$\leq$T2$\leq$1300°C; and a time for the carbonization treatment is a second time t2, 1 h$\leq$t2$\leq$4 h; and/or
the third reaction temperature T3 satisfies 900°C$\leq$T3$\leq$1000°C; and a time for the activation treatment is a third time t3, 10 h$\leq$t3$\leq$14 h.

FIG. 1A

FIG. 1B

XRD pattern

FIG. 2

Isothermal adsorption/desorption curve

FIG. 3

Accumulated pore volume

FIG. 4

Isothermal adsorption/desorption curve

FIG. 5

Accumulated pore volume

FIG. 6

Europäisches
Patentamt

European
Patent Office

Office européen
des brevets

# EUROPEAN SEARCH REPORT

**Application Number**

EP 24 18 5111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 10 693 148 B2 (SAMSUNG ELECTRONICS CO LTD [KR]) 23 June 2020 (2020-06-23)<br>* column 1 - column 24; claims 1-17 *<br>----- | 1-9<br><br>10,11<br>12-15 | INV.<br>C01B32/05<br>C01B32/168<br>H01M4/62<br>C01B32/312 |
| X<br><br>A | JP 2023 079084 A (NAT INST MATERIALS SCIENCE; SOFTBANK CORP) 7 June 2023 (2023-06-07)<br>* paragraph [0001] - paragraph [0094]; claims 1-9 *<br>----- | 12-15<br><br><br>1-11 | H01G11/34<br>H01G11/36<br>H01G11/42<br>H01G11/24<br>H01G11/30<br>H01M4/133 |
| X<br>Y<br>A | US 2020/365896 A1 (SAKSHAUG AVERY J [US] ET AL) 19 November 2020 (2020-11-19)<br>* paragraph [0001] - paragraph [0627]; claims 83-101 *<br>----- | 1<br>10,11<br>2-9,<br>12-15 | H01M4/134<br>H01M4/36<br>H01M4/38<br>H01M4/587<br>H01M10/0525<br><br><br>ADD. |

**TECHNICAL FIELDS SEARCHED (IPC)**

C01B
H01M
H01G

The present search report has been drawn up for all claims

| Place of search | Date of completion of the search | Examiner |
|---|---|---|
| The Hague | 31 October 2024 | Konstantopoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 18 5111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | H01M4/02 |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| The Hague | 31 October 2024 | Konstantopoulos, G |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

.......................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 18 5111

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2024

| Patent document cited in search report | | Publication date | Patent family member(s) | | Publication date |
|---|---|---|---|---|---|
| US 10693148 | B2 | 23-06-2020 | KR 20160149103 A | | 27-12-2016 |
| | | | KR 20220020297 A | | 18-02-2022 |
| | | | US 2016372807 A1 | | 22-12-2016 |
| JP 2023079084 | A | 07-06-2023 | JP 7486129 B2 | | 17-05-2024 |
| | | | JP 2023079084 A | | 07-06-2023 |
| US 2020365896 | A1 | 19-11-2020 | CN 108475779 A | | 31-08-2018 |
| | | | CN 113224274 A | | 06-08-2021 |
| | | | EP 3341990 A1 | | 04-07-2018 |
| | | | EP 3836261 A1 | | 16-06-2021 |
| | | | EP 4286355 A2 | | 06-12-2023 |
| | | | JP 7115976 B2 | | 09-08-2022 |
| | | | JP 7458445 B2 | | 29-03-2024 |
| | | | JP 2018534720 A | | 22-11-2018 |
| | | | JP 2022153561 A | | 12-10-2022 |
| | | | JP 2024073597 A | | 29-05-2024 |
| | | | KR 20180113187 A | | 15-10-2018 |
| | | | KR 20230091915 A | | 23-06-2023 |
| | | | KR 20230092015 A | | 23-06-2023 |
| | | | KR 20240023451 A | | 21-02-2024 |
| | | | US 11495798 B1 | | 08-11-2022 |
| | | | US 2017170477 A1 | | 15-06-2017 |
| | | | US 2019280298 A1 | | 12-09-2019 |
| | | | US 2020075954 A1 | | 05-03-2020 |
| | | | US 2020152983 A1 | | 14-05-2020 |
| | | | US 2020365896 A1 | | 19-11-2020 |
| | | | US 2022231296 A1 | | 21-07-2022 |
| | | | US 2023058348 A1 | | 23-02-2023 |
| | | | WO 2017040299 A1 | | 09-03-2017 |

EPO FORM P0459

For more details about this annex : see Official Journal of the European Patent Office, No. 12/82